# EUROPEAN PATENT SPECIFICATION

(11) **EP 4 161 028 B1**
(45) Date of publication and mention of the grant of the patent: **25.09.2024**
(21) Application number: 21200003.8
(22) Date of filing: 29.09.2021
(51) Int. Cl.: H04L 45/50, H04L 12/46

(54) **METHOD FOR OPERATING A BROADBAND ACCESS NETWORK OF A TELECOMMUNICATIONS NETWORK COMPRISING A PLURALITY OF CENTRAL OFFICE POINTS OF DELIVERY, BROADBAND ACCESS NETWORK OR TELECOMMUNICATIONS NETWORK, CENTRAL OFFICE POINT OF DELIVERY, SYSTEM, PROGRAM AND COMPUTER-READABLE MEDIUM**
VERFAHREN ZUM BETRIEB EINES BREITBAND-ZUGANGSNETZES EINES TELEKOMMUNIKATIONSNETZES, DAS MEHRERE ZENTRALE ZUSTELLPUNKTE UMFASST, BREITBAND-ZUGANGSNETZ ODER TELEKOMMUNIKATIONSNETZ, ZENTRALE ZUGANGSPUNKTE, SYSTEM, PROGRAMM UND COMPUTERLESBARES MEDIUM
PROCÉDÉ DE FONCTIONNEMENT D'UN RÉSEAU D'ACCÈS À LARGE BANDE D'UN RÉSEAU DE TÉLÉCOMMUNICATIONS COMPRENANT UNE PLURALITÉ DE POINTS DE LIVRAISON DE CENTRAL TÉLÉPHONIQUE, RÉSEAU D'ACCÈS À LARGE BANDE OU RÉSEAU DE TÉLÉCOMMUNICATIONS, POINT DE LIVRAISON DE CENTRAL TÉLÉPHONIQUE, SYSTÈME, PROGRAMME ET SUPPORT LISIBLE PAR ORDINATEUR

(43) Date of publication of application: 05.04.2023
(73) Proprietor: Deutsche Telekom AG, 53113 Bonn (DE)
(72) Inventor: SOUKUP, Robert, 60594 Frankfurt am Main (DE)
(74) Representative: Schwöbel, Thilo K.

(56) References cited:
- WO-A1-2018/149702
- US-A1- 2003 112 756
- US-A1- 2008 172 497
- US-A1- 2016 315 808

## Description

### BACKGROUND

The present invention relates to a method for operating a broadband access network of a telecommunications network comprising a plurality of central office points of delivery, wherein each one of the plurality of central office points of delivery comprises a transport functionality or service and has or is connected to an access functionality being realized by means of a plurality of access nodes that terminate physical subscriber lines serving end users of the telecommunications network, wherein, regarding a specific central office point of delivery, the respective transport functionality or service acts as an ingress router and/or an egress router to a wide area network domain.

Furthermore, the present invention relates to a broadband access network or telecommunications network for being operated comprising a plurality of central office points of delivery, wherein each one of the plurality of central office points of delivery comprises a transport functionality or service and has or is connected to an access functionality being realized by means of a plurality of access nodes that terminate physical subscriber lines serving end users of the telecommunications network, wherein, regarding a specific central office point of delivery, the respective transport functionality or service acts as an ingress router and/or an egress router to a wide area network domain.

Additionally, the present invention relates to a central office point of delivery for operating a broadband access network of a telecommunications network that comprises a plurality of central office points of delivery, wherein the central office point of delivery comprises a transport functionality or service and has or is connected to an access functionality being realized by means of a plurality of access nodes that terminate physical subscriber lines serving end users of the telecommunications network, wherein the transport functionality or service acts as an ingress router and/or an egress router to a wide area network domain.

Furthermore, the present invention relates to a program and a computer-readable medium for an operation of a broadband access network of a telecommunications network comprising a plurality of central office points of delivery.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In conventionally known architectures involving a plurality of central office points of delivery, such a plurality of central office points of delivery are typically designed such as to almost exclusively rely on backbone infrastructure nodes (or core infrastructure) for handling wide area network traffic, especially internet access traffic, i.e. regarding such wide area network traffic, a specific (considered) central office point of delivery typically acts as an ingress router and/or as an egress router, typically a label edge router, especially in case of an multiprotocol label switching network architecture of the wide area network domain.

This creates drawbacks or is inefficient, especially in case that more or a greater share of regional traffic, e.g. between two central office points of delivery, is to be handled.

With regard to conventionally known architectures, document US 2016/0315808 A1 addresses the problem that "long haul" bonding or aggregation of communication links leads to slow transmission through the backbone network, and proposes termination of the bonded/aggregated connection by servers/concentrators before passing the traffic to the backbone. Document US 2003/112756 A1 describes a system for providing conditional bandwidth subscriptions to MPLS label switched paths (LSPs) and document WO 2018/149702 A1 describes MPLS segment routing within a leaf/spine fabric. Document US 2008/172497 A1 describes a network including an Ethernet network and a plurality of MPLS networks interconnected by the Ethernet network, in which ethernet encapsulated LSP frames received from one of the MPLS networks at an ingress to the Ethernet network are mapped onto the paths at the ingress to the Ethernet network according to classification identifiers associated with the Ethernet encapsulated LSP frames.

### SUMMARY

An object of the present invention is to provide a technically simple, effective and cost effective solution for operating a broadband access network of a telecommunications network comprising a plurality of central office points of delivery, wherein each one of the plurality of central office points of delivery comprises a transport functionality or service and has or is connected to an access functionality being realized by means of a plurality of access nodes that terminate physical subscriber lines serving end users of the telecommunications network, wherein the transport functionality or service of a specific central office point of delivery handles and/or transports marked data packets - in a connection oriented manner in a wide area network domain - both as ingress router and/or as egress router, and as an identifier-based switch router functionality of or towards the wide area network domain. A further object of the present invention is to provide a corresponding broadband access network or telecommunications network, a corresponding central office point of delivery and a corresponding system according to the present invention.

The object of the present invention is achieved by a method according to claim 1.

It is thereby advantageously possible according to the present invention to provide a solution such that traffic between different central office points of delivery does not necessarily be routed using a wide area network infrastructure, i.e. using one or a plurality of backbone infrastructure nodes (or core infrastructure) but it is advantageously possible according to the present invention that local traffic is able to be forwarded directly between different central office points of delivery, i.e. from one considered (or specific) central office point of delivery to another (especially neighboring) central office point of delivery. Especially, it is advantageously possible according to the present invention that such traffic, especially local traffic, is able to be routed along a chain of different central office points of delivery (i.e. their respective transport functionality or service), i.e. from a first central office point of delivery to a second central office point of delivery, via another (specific) central office point of delivery; hence the specific central office point of delivery receives marked data packets from the first central office point of delivery and transmits (or forwards) the marked data packets to the second central office point of delivery.

In conventionally known telecommunications networks, typically a certain number of central office points of delivery are provided in order to realize one of the main components of a broadband access network (of the telecommunications network). In addition to the broadband access network, the telecommunications network also comprises or is at least able to access or to be connected to backbone infrastructure nodes (or core infrastructure nodes) for handling wide area network traffic, especially internet access traffic, i.e. non-local traffic. Such backbone infrastructure nodes often provide a multiprotocol label switching functionality (especially in the form of label switch routers, LSRs) especially with regard to such non-local traffic, and the central office points of delivery act as ingress or egress routers, typically label edge routers. However, such an architecture also requires to involve the backbone infrastructure nodes (or core infrastructure nodes) in the handling of traffic that cannot be dealt with internally to a central office point of delivery.

According to the present invention, it is advantageously possible to route traffic among a plurality of different central office points of delivery - especially in case of rather local traffic - without the strict necessity to involve backbone infrastructure nodes (or core infrastructure) for traffic that involves a plurality of central office points of delivery (e.g. either between two adjacent central office points of delivery, or between two (first and second) central office points of delivery that are linked via another (specific) central office point of delivery).

Hence, according to the present invention, the operation of a broadband access network of a telecommunications network is addressed. The broadband access network comprises a plurality of central office points of delivery, and each one of the plurality of central office points of delivery comprises a transport functionality or service and has or is connected to an access functionality being realized by means of a plurality of access nodes that terminate physical subscriber lines serving end users of the telecommunications network.
Regarding one considered (or, hereinafter also called 'specific') central office point of delivery, the respective transport functionality or service acts not only as an ingress router and/or an egress router to a wide area network domain that handles and/or transports marked data packets in a connection-oriented manner, but also provides an identifier-based switch router functionality - especially realized by means of an additional function, especially realized by means of a microservice - of or towards the wide area network domain. This means that marked data packets are able to be forwarded directly between, or among, central office points of delivery (or their respective transport functionalities or services), i.e. it is possible to route marked data packets from a first to a second of the plurality of central office points of delivery via the considered central office point of delivery (i.e. in a first step, the specific central office point of delivery receives marked data packets from the first central office point of delivery, and in a second step, transmits the marked data packets to a second central office point of delivery), or to route such marked data packets between two (especially adjacent) central office points of delivery.

According to the present invention, the wide area network domain especially comprises backbone infrastructure nodes (or core infrastructure nodes); however alternatively, the wide area network domain might also essentially consist of the plurality of central office points of delivery and their respective transport functionalities or services.

According to the present invention, it is especially advantageously possible that emergent traffic pattern are able to be served in a very efficient manner:
Conventionally, in telecommunications networks the dominant traffic pattern is rather downlink driven or oriented, i.e. the user requests a response which could, e.g., be a web page, a pdf file, a song or a movie from somewhere on the internet. Such a requirement is able to be efficiently handled by means of using a hub and spoke architecture of centralized and rather performant backbone infrastructure nodes (or core infrastructure nodes, e.g. IP-Core network nodes or locations) - e.g. a number of such backbone infrastructure nodes that are capable of serving, respectively, for example, between around 10 or around 100 central office points of delivery (which centralization also means there to be quite a distance of, e.g., 100km or even several 100 km between a central office point of delivery and the corresponding backbone infrastructure node). However, in case of traffic pattern changing to more regional traffic, such a hub and spoke architecture becomes inefficient, as the backbone infrastructure nodes (or core infrastructure nodes) are required to be involved for routing even regional traffic.
Furthermore, a requirement to use such a hub and spoke system architecture provides additional redundancy only by duplicating backbone infrastructure nodes (especially label switch router in a system using or based on multiprotocol label switching); there is no other way to create higher availability but to invest in further backbone infrastructure nodes.
Examples for such traffic pattern changes are surveillance, gaming (low latency) and mobile system control (professional services). Moreover, the large-scale Internet service providers (e.g. Amazon) invest heavily to fan out to the regions (AWS outpost).

Hence, according to the present invention, such drawbacks or inefficiencies, especially in case that more or a greater share of regional traffic is to be handled by the telecommunications network, are able to be either avoided or at least reduced.

According to the present invention, marked data packets (especially IP packets) are used or handled, within (or among the nodes of) the wide area network domain, in order to provide for a connection-oriented handling and/or transport of data packets within the wide area network domain, even though the wide area network domain corresponds to a connectionless network. The marked data packets are marked using an identifier that typically defines the path (through the wide area network domain) that the corresponding data packet is required to use or is transported along. According to the present invention, different implementations of such a marking or the use of such identifiers are able to be realized:
The present invention is based on using the established multiprotocol label switching technology, i.e. using a label information in the header part of the respective data packet or data packets; hence, the label information (or identifier) are part of (the header) of the marked data packets.
According to an alternative not covered by the claimed invention, the data packets are marked in a different manner, i.e. the identifier, especially identifying the path that the data packet shall be transported along (through the wide area network domain), might not conform to the multiprotocol label switching technology, but, instead, might be transported externally to the respective data packet, e.g. in the form of an additional (control) data packet transported in addition to the considered payload data packet;
according to such an alternative embodiment, (even though the considered payload data packets might not comprise any metadata or identifier or label themselves, i.e. as a part thereof) the respective data packet or data packets are nevertheless marked (providing the possibility to apply an identifier-based switching of such data packets) using the additional (control) data packets.

The telecommunications network according to the present invention might be a fixed-line telecommunications network or a mobile communication network but could also have both aspects, i.e. parts of a fixed-line telecommunications network (or being a fixed-line telecommunications network in such parts) and parts of a mobile communication network (or being a mobile communication network in such parts); such networks are also known under the term fixed-mobile-convergence networks (FMC networks).

According to the present invention the wide area network domain is or corresponds to a multiprotocol label switching, MPLS, domain, wherein the transport functionality or service provides a label edge router functionality such that, regarding the specific central office point of delivery, the transport functionality or service acts as ingress router and/or as egress router of or towards the multiprotocol label switching, MPLS, domain, wherein furthermore the identifier-based switch router functionality acts as label switch router of or towards the multiprotocol label switching, MPLS, domain, wherein the marked data packets are or correspond to MPLS-labelled data packets, handled and/or transported by the multiprotocol label switching domain.

By means of using multiprotocol label switching in the wide area network domain, it is advantageously possible to provide the transport functionality or service of the plurality of central office points of delivery - with regard to the wide area network domain, i.e. northbound - with both the label edge router functionality (i.e. acting as ingress router and/or as egress router of or towards the (wide area network) multiprotocol label switching, MPLS, domain), and the label switch router functionality of or towards the (wide area network) multiprotocol label switching, MPLS, domain.

According to the present invention, the transport functionality or service corresponds to or comprises a switching fabric, wherein the switching fabric comprises at least one spine network node, wherein the at least one spine network node is part of the wide area network domain and acts as identifier-based switch router within the wide area network domain,
wherein especially corresponding spine network nodes of the first and second central office points of delivery likewise act as identifier-based switch router within the wide area network domain.

It is thereby advantageously possible according to the present invention that the telecommunications network and/or the broadband access network, and especially the plurality of central office points of delivery are able to be used more efficiently and more flexibly for transporting marked data packets. Especially, the spine network nodes (of the corresponding central office points of delivery) are especially fully redundant. Such spine network nodes are typically used for aggregation and connectivity for inner traffic within the respective central office point of delivery (so-called southbound traffic). But they are also able to act as label edge routers (LER) in or towards the wide area network domain, i.e. regarding northbound traffic. This means such spine network nodes (or, the transport functionality or service) host the full Internet routing table and put (or push) / remove (or pop) a respective identifier in the form of an MPLS-label, to/from the corresponding IP packets.

According to a further preferred embodiment of the present invention, the at least one spine network node is additionally part of a further network domain - especially a multiprotocol label switching, MPLS, domain - of or among components of the specific central office point of delivery,
wherein the at least one spine network node acts as identifier-based switch router within the further network domain (especially multiprotocol label switching, MPLS, domain).

It is thereby advantageously possible according to the present invention that also as part of the central office point of delivery, a connection-oriented handling of data packets is realized.

According to a further preferred embodiment of the present invention, the switching fabric of the specific central office point of delivery comprises, besides the at least one spine network node, a plurality of leaf network nodes, wherein the leaf network nodes especially provide an edge functionality or service and/or wherein the access nodes of the access functionality are especially connected, respectively, to at least two leaf network nodes of the plurality of leaf network nodes.

It is thereby advantageously possible that the central office points of delivery are especially built on or using a leaf/spine architecture.

According to a further preferred embodiment of the present invention, the corresponding transport functionality or service of each of the plurality of central office points of delivery are part of the wide area network domain, wherein especially a certain number of central office points of delivery are connected such as to be meshed, especially forming 3X3, or 4X4, or nXm meshes of central office points of delivery.

Thereby, it is advantageously possible to efficiently implement the method according to the present invention and to further increase the efficiency in handling user traffic. According to the present invention, nXm meshes correspond to n central office points of delivery (n and m being an integer, e.g. 2, 3, 4, 5, 6, 7, 8, 9, or 10), and each one of these n central office points of delivery is linked to each one of the other central office points of delivery.

According to a further embodiment of the present invention, by means of the corresponding transport functionality or service of each of the plurality of central office points of delivery, the central office points of delivery act a traffic forwarder, besides being an aggregation and service creation point.

Thereby, it is advantageously possible to easily and efficiently implement the inventive method.

Furthermore, according to a preferred embodiment of the present invention, the telecommunications network and/or the broadband access network additionally comprise one or a plurality of backbone identifier-based switch routers, wherein the backbone identifier-based switch routers are part of the wide area network domain, wherein at least one of the backbone identifier-based switch routers additionally comprise or is connected to at least one content delivery network and/or at least one local data center, wherein the at least one content delivery network especially provide for caching internet traffic and/or wherein the at least one local data center provide for storing data, especially sensitive data that should be refrained from being sent to the internet.

Thereby, it is advantageously possible to efficiently implement the method according to the present invention and to be able to additionally also use backbone identifier-based switch routers.

Furthermore, the present invention relates to a broadband access network or telecommunications network according to claim 8.

Additionally, the present invention relates to a central office point of delivery according to claim 9.

Still additionally, the present invention relates to a program comprising a computer readable program code which, when executed on a computer and/or on a network node of a telecommunications network or on a network node of a broadband access network and/or on a transport functionality or service of a central office point of delivery, or in part on the network node of the telecommunications network or in part on the network node of a broadband access network, or in part on the transport functionality or service of the central office point of delivery, causes the computer and/or the network node of the telecommunications network and/or the network node of the broadband access network and/or the transport functionality or service of the central office point of delivery to perform the inventive method.

Furthermore, the present invention relates to a computer-readable medium comprising instructions which when executed on a computer and/or on a network node of a telecommunications network or on a network node of a broadband access network and/or on a transport functionality or service of a central office point of delivery, or in part on the network node of the telecommunications network or in part on the network node of a broadband access network, or in part on the transport functionality or service of the central office point of delivery, causes the computer and/or the network node of the telecommunications network and/or the network node of the broadband access network and/or the transport functionality or service of the central office point of delivery to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery.
Figure 2 schematically shows in greater detail three central office points of delivery comprising a certain number of components, entities and/or network nodes.
Figure 3 schematically illustrates a central office point of delivery.
Figure 4 schematically illustrates two embodiments showing, respectively, a plurality of central office points of delivery being connected or meshed.
Figure 5 schematically illustrates a plurality of central office points of delivery connected to other network nodes.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the embodiments of the invention described herein are capable of operation in other sequences than described or illustrated herein.

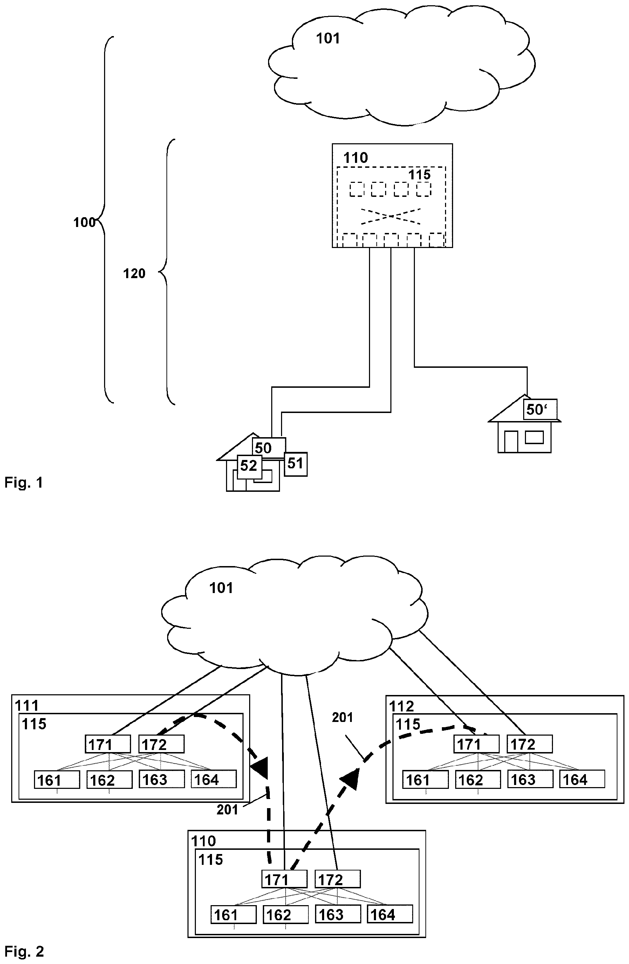

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipment or client devices 51, 52 are connected to the telecommunications network 100 by means of a (broadband) access network 120. The telecommunications network 100 comprises, especially as part of the broadband access network 120, at least one logical or physical central office point of delivery 110 that is preferably realized within a (mini) data center and that is especially handling different access requirements, especially different access possibilities, of the client devices 51, 52 to network functionalities provided by the telecommunications network 100 or via the telecommunications network 100. In addition, the telecommunications network 100 typically also comprises - besides the broadband access network 120 - a core network 101. The client devices 51, 52 are typically connected to the logical or physical central office point of delivery 110 by means of a customer premises equipment device 50, 50' or by means of a customer premises equipment functionality that might be built into or realized by the client devices 51, 52. The central office point of delivery 110 comprises a switching fabric 115 comprising a plurality of spine network nodes and a plurality of leaf network nodes which are not explicitly represented in Figure 1.

Figure 2 schematically illustrates in greater detail three central office points of delivery comprising a certain number of components, entities and/or network nodes. The central office points of delivery are part of and/or connected to a wide area network domain 101 (that might be part of the core network and/or at least partly overlapping or be separated thereof). The wide area network domain 101 handles and/or transports marked data packets 201 in a connection-oriented manner.
Specifically, Figure 2 represents the case that marked data packets 201 are to be forwarded, by a specific central office point of delivery 110, from a first central office point of delivery 111 and towards a second central office point of delivery 112. This means that, in a first step, the specific central office point of delivery 110 receives marked data packets 201 from the first central office point of delivery 111, and, in a second step, the specific central office point of delivery 110 transmits the marked data packets 201 to the second central office point of delivery 112. The forwarding of the marked data packets 201 is performed - for each of the central office points of delivery 110, 111, 112 - by a transport functionality or service 115. This transport functionality or service 115 is designated and represented, in Figure 2, by means of the same reference sign 115; however, it is to be understood that the transport functionality or service 115 is especially specific to the respective central office point of delivery 110, 111, 112. Likewise, as part of the respective transport functionality or service 115, a first spine network node 171, and a second spine network node 172 is schematically shown. Likewise, leaf network nodes 161, 162, 163, 164 are schematically shown as part of the respective transport functionality or service 115 of the different central office points of delivery. In the exemplary embodiment shown in Figure 2, the marked data packets 201 are transmitted by the second spine network node 172 of the first central office point of delivery 111 to the first spine network node 171 of the specific central office point of delivery 110, and from there forwarded to the first spine network node 171 of the second central office point of delivery 112. Hence, the transport functionality or service 115 of the specific central office point of delivery 110, does not only act as ingress router and/or as egress router with respect to the wide area network domain 101 but also provides an identifier-based switch router functionality of or towards the wide area network domain 101. Thereby, the marked data packets are handled and/or transported in a connection-oriented manner.

According to the present invention, the wide area network domain 101 comprises nodes of the transport functionality or service 115 (the spine network nodes 171, 172) of the respective central office points of delivery 110, 111, 112. The wide area network domain 101 is implemented using or according to multiprotocol label switching technology. Multiprotocol label switching solves inefficiencies in a connectionless IP network, where traditionally paths have to be decided for each and every data packet. Multiprotocol label switching instead uses pre-determined paths (Label Switch Paths) within an IP network across several hops. This better reflects real traffic patterns, which know a specific source (e.g. Netflix peering point at DE-CIX), a destination (e.g. and end user in Munich) as well as sensible network connectivity in-between. And the sensible network connectivity is not coined by "any hop is fine" (from Frankfurt to Munich via Japan and the U.S.) but more like the real geographic stretch along sufficient network capacity. Multiprotocol label switching is a highway-like connection-oriented functionality in a connectionless IP network. Hence MPLS is often considered as OSI 2.5 layer (between network and data link layers).

According to the present invention, the transport functionality or service 115 - i.e. the spine network nodes 171, 172 of the respective central office points of delivery - not only act as ingress and/or egress router of the wide area network domain 101 but also as identifier-based switch router functionality (label switch router (LSR) according to multiprotocol label switching parlance). Typically, label switch routers are the heart of an MPLS network or multiprotocol label switching network domain as such routers are able to quickly route (marked) data packets 201 without having to check tables or do routing calculations, which would add to the send/receive time of data.
The gatekeepers for the MPLS network (domain) (or wide area network domain 101) are the label edge router (or ingress label switch routers). On ingress (of a data packet), such label edge routers add a label (or an identifier information) to each and every IP packet-independent of the actual protocol used (TCP, UDP, ...); on egress, such label edge router remove the respective label (or identifier information) from the data packet. This label (or this identifier information) is the information used by the label switch routers (identifier-based switch router functionality) to do their fast forwarding along the established paths (especially label switch paths.

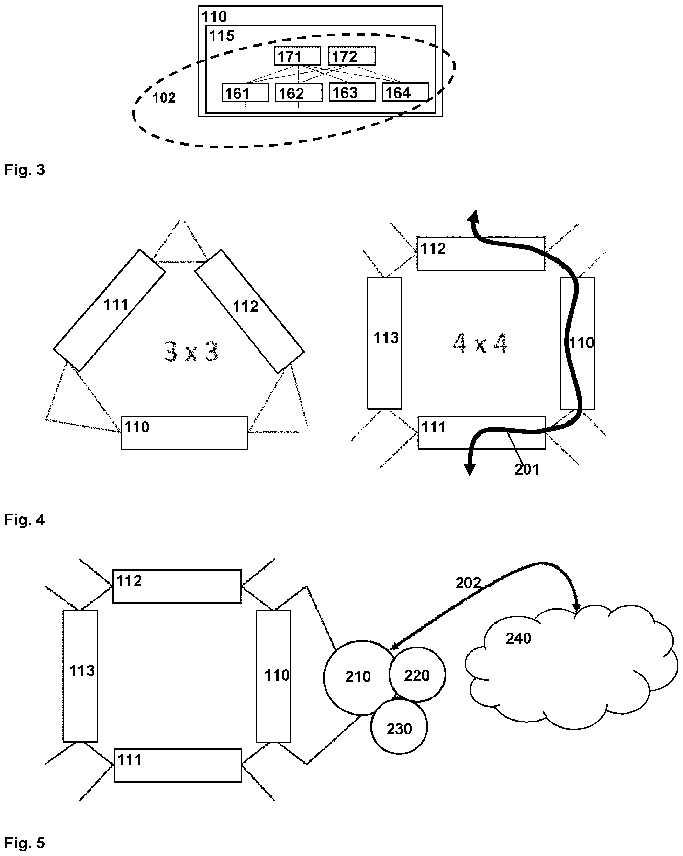

In Figure 3, a central office point of delivery - or, rather, the specific central office point of delivery 110 - is schematically shown. The (specific) central office point of delivery 110 comprises, as part of its transport functionality or service 115 (or realized by its transport functionality or service 115) a further network domain 102, which is a further multiprotocol label switching, MPLS, domain. The further network domain 102 is a network domain of or among components of the specific central office point of delivery 110. The at least one spine network node 171, 172 acts as identifier-based switch router within the further network domain 102 (multiprotocol label switching, MPLS, domain 102).

Figure 4 schematically illustrates two embodiments showing, respectively, a plurality of central office points of delivery being connected or meshed. In representation on the left hand of Figure 4, three central office points of delivery 110, 111, 112 form a mesh of central office points of delivery (3x3 mesh), and on the right hand side of Figure 4, four central office points of delivery 110, 111, 112, 113 form a mesh of central office points of delivery (4x4 mesh). Especially, on the right hand side of Figure 4, a forwarding path of marked data packets 201 is schematically shown between the specific central office point of delivery 110 as well as the first central office point of delivery 111 and the second central office point of delivery 112. As can be seen from the Figure 4, it is advantageously possible according to the present invention to realize the broadband access network 120 without necessarily relying on backbone infrastructure nodes (or core infrastructure) - only the transport functionalities or services of the respective central office points of delivery are meshed or connected with each other (by means of connecting adjacent central office points of delivery), and wide area traffic is nevertheless able to be routed or forwarded. Hence, by means of the transport functionality or service 115 (or the spine network nodes 171, 172) also receives the label switch router functionality (or identifier-based switch router functionality) - especially by means of an additional function, especially realized by means of a microservice -, the backbone infrastructure nodes (or core infrastructure) are able to be taken out. The spine network nodes 171, 172 are provided with the label switch router functionality (or identifier-based switch router functionality);
Typically, spine network nodes 171, 172 (not shown in Figure 4) have a switching capacity of 4-5 times as they need to serve their own central office point of delivery 110, 111, 112, 113. The limiting factor are typically the large buffers (to host the Internet routing tables). However, these buffers are not needed for the label switch router functionality (or identifier-based switch router functionality); hence, a typical spine network node 171, 172 normally has sufficient capacity to also provide the label switch router functionality (or identifier-based switch router functionality). The spine network nodes 171, 172 are, hence, enabled to forward traffic (i.e. marked data packets) also from outside of the (specific) central office point of delivery 110 which is facilitated by means of meshing (or linking, especially directly linking or connecting) different central office points of delivery 110, 111, 112, 113 together, especially with respect to adjacent central office points of delivery.

In addition to the two embodiments shown in Figure 4, further embodiment, especially nxm meshes (wherein n and m are integers) are possible and preferred according to the present invention. Hence, besides being an aggregation and service creation point, a central office point of delivery 110 is also a traffic forwarder.

According to a preferred embodiment of the present invention, schematically shown in Figure 5, the central office point of delivery 110 (or a plurality of central office points of delivery 110, 111, 112, 113 are able to be connected to other network nodes such as content cashes and/or highways to the internet. The telecommunications network 100 and/or the broadband access network 120 additionally especially comprise one or a plurality of backbone identifier-based switch routers 210. Such backbone identifier-based switch routers 210 are typically part of the wide area network domain 101. Especially, at least one of the backbone identifier-based switch routers 210 additionally comprise or is connected to at least one content delivery network 220 and/or at least one local data center 230. The at least one content delivery network 220 especially provides for caching internet traffic; the at least one local data center 230 provides for storing data, especially sensitive data 202 that should be refrained from being sent to the internet 240. Especially, for internet related traffic, special backbone identifier-based switch routers 210 (i.e. special LSRs) are used to connect to peering points (e.g. DE-CIX); CDNs (content delivery networks 220) are able to help to cache internet traffic.

## Claims

1. Method for operating a broadband access network (120) of a telecommunications network (100) comprising a plurality of central office points of delivery (110, 111, 112, 113),
wherein each one of the plurality of central office points of delivery (110, 111, 112, 113) comprises a transport functionality or service (115) and has or is connected to an access functionality being realized by means of a plurality of access nodes that terminate physical subscriber lines serving end users of the telecommunications network (100),
wherein, regarding a specific central office point of delivery (110), the respective transport functionality or service (115) acts as an ingress router and/or an egress router to a wide area network domain (101), wherein the wide area network domain (101) is or corresponds to a multiprotocol label switching, MPLS, domain (101),
wherein the wide area network domain (101) handles and/or transports marked data packets (201) in a connection oriented manner, wherein the marked data packets (201) are or correspond to MPLS-labelled data packets (201),
**characterized in that** the transport functionality or service (115) corresponds to or comprises a switching fabric (115) with a leaf/spine architecture, wherein the switching fabric (115) comprises at least one spine network node (171, 172), wherein the at least one spine network node (171, 172) is part of the wide area network domain (101) and acts as identifier-based switch router within the wide area network domain (101), and wherein, in order to operate the broadband access network (120) for providing the access functionality associated with the plurality of central office points of delivery (110, 111, 112, 113), the at least one spine network node (171, 172) of the specific central office point of delivery (110), in addition to acting as ingress router and/or as egress router, acts as label switch router providing an identifier-based switch router functionality of or towards the wide area network domain (101) such that:
-- in a first step, the specific central office point of delivery (110) receives marked data packets (201) from a first central office point of delivery (111), and
-- in a second step, transmits the marked data packets (201) to a second central office point of delivery (112).

2. Method according to claim 1, wherein corresponding spine network nodes of the first and second central office points of delivery (111, 112) likewise act as identifier-based switch router within the wide area network domain (101).

3. Method according to one of the preceding claims, wherein the at least one spine network node (171, 172) is additionally part of a further multiprotocol label switching, MPLS, domain (102) of or among components of the specific central office point of delivery (110),
wherein the at least one spine network node (171, 172) acts as identifier-based switch router within the further multiprotocol label switching, MPLS, domain (102).

4. Method according to one of the preceding claims, wherein the switching fabric (115) of the specific central office point of delivery (110) comprises, besides the at least one spine network node (171, 172), a plurality of leaf network nodes (161, 162), wherein the leaf network nodes (161, 162) especially provide an edge functionality or service (160) and/or wherein the access nodes of the access functionality are especially connected, respectively, to at least two leaf network nodes of the plurality of leaf network nodes (161, 162).

5. Method according to one of the preceding claims, wherein the corresponding transport functionality or service (115) of each of the plurality of central office points of delivery (110, 111, 112, 113) are part of the wide area network domain (101), wherein especially a certain number of central office points of delivery (110, 111, 112, 113) are connected such as to be meshed, especially forming 3X3, or 4X4 meshes of central office points of delivery (110, 111, 112, 113).

6. Method according to one of the preceding claims, wherein by means of the corresponding transport functionality or service (115) of each of the plurality of central office points of delivery (110, 111, 112, 113), the central office points of delivery (110, 111, 112, 113) act a traffic forwarder, besides being an aggregation and service creation point.

7. Method according to one of the preceding claims, wherein the telecommunications network (100) and/or the broadband access network (120) additionally comprise one or a plurality of backbone identifier-based switch routers (210), wherein the backbone identifier-based switch routers (210) are part of the wide area network domain (101), wherein at least one of the backbone identifier-based switch routers (210) additionally comprise or is connected to at least one content delivery network (220) and/or at least one local data center (230), wherein the at least one content delivery network (220) especially provide for caching internet traffic and/or wherein the at least one local data center (230) provide for storing data, especially sensitive data (202) that should be refrained from being sent to the internet (240).

8. Broadband access network (120) or telecommunications network (100) for being operated comprising a plurality of central office points of delivery (110, 111, 112, 113),
wherein each one of the plurality of central office points of delivery (110, 111, 112, 113) comprises a transport functionality or service (115) and has or is connected to an access functionality being realized by means of a plurality of access nodes that terminate physical subscriber lines serving end users of the telecommunications network (100),
wherein, regarding a specific central office point of delivery (110), the respective transport functionality or service (115) acts as an ingress router and/or an egress router to a wide area network domain (101), wherein the wide area network domain (101) is or corresponds to a multiprotocol label switching, MPLS, domain (101),
wherein the wide area network domain (101) handles and/or transports marked data packets (201) in a connection oriented manner, wherein the marked data packets (201) are or correspond to MPLS-labelled data packets (201),
**characterized in that** the transport functionality or service (115) corresponds to or comprises a switching fabric (115) with a leaf/spine architecture, wherein the switching fabric (115) comprises at least one spine network node (171, 172), wherein the at least one spine network node (171, 172) is part of the wide area network domain (101) and is configured to act as identifier-based switch router within the wide area network domain (101), and wherein, in order for the broadband access network (120) and/or the telecommunications network (100) to be operated for providing the access functionality associated with the plurality of central office points of delivery (110, 111, 112, 113), the at least one spine network node (171, 172) of the specific central office point of delivery (110) is configured such that, in addition to acting as ingress router and/or as egress router, it acts as a label switch router providing an identifier-based switch router functionality of or towards the wide area network domain (101) by means of receiving marked data packets (201) from a first central office point of delivery (111), and transmitting the marked data packets (201) to a second central office point of delivery (112).

9. Central office point of delivery (110) for operating a broadband access network (120) of a telecommunications network (100) that comprises a plurality of central office points of delivery (110, 111, 112, 113), wherein the central office point of delivery (110) comprises a transport functionality or service (115) and has or is connected to an access functionality being realized by means of a plurality of access nodes that terminate physical subscriber lines serving end users of the telecommunications network (100),
wherein the transport functionality or service (115) acts as an ingress router and/or an egress router to a wide area network domain (101), wherein the wide area network domain (101) is or corresponds to a multiprotocol label switching, MPLS, domain (101),
wherein the wide area network domain (101) handles and/or transports marked data packets (201) in a connection oriented manner, wherein the marked data packets (201) are or correspond to MPLS-labelled data packets (201),
**characterized in that** the transport functionality or service (115) corresponds to or comprises a switching fabric (115) with a leaf/spine architecture, wherein the switching fabric (115) comprises at least one spine network node (171, 172), wherein the at least one spine network node (171, 172) is part of the wide area network domain (101) and is configured to act as identifier-based switch router within the wide area network domain (101), and wherein, in order for providing the access functionality associated with the central office point of delivery (110), the at least one spine network node (171, 172) of the central office point of delivery (110) is configured such that, in addition to acting as ingress router and/or as egress router, it acts as label switch router providing an identifier-based switch router functionality of or towards the wide area network domain (101) by means of receiving marked data packets (201) from a first central office point of delivery (111) of the plurality of central office points of delivery (110, 111, 112, 113), and transmitting the marked data packets (201) to a second central office point of delivery (112) of the plurality of central office points of delivery (110, 111, 112, 113).

10. Program comprising a computer readable program code which, when executed on a computer and/or on a network node of a telecommunications network (100) or on a network node of a broadband access network (120) and/or on a transport functionality or service (115) of a central office point of delivery (110, 111, 112, 113), or in part on the network node of the telecommunications network (100) or in part on the network node of a broadband access network (120), or in part on the transport functionality or service (115) of the central office point of delivery (110, 111, 112, 113), causes the computer and/or the network node of the telecommunications network (100) and/or the network node of the broadband access network (120) and/or the transport functionality or service (115) of the central office point of delivery (110, 111, 112, 113) to perform a method according one of claims 1 to 7.

11. Computer-readable medium comprising instructions which when executed on a computer and/or on a network node of a telecommunications network (100) or on a network node of a broadband access network (120) and/or on a transport functionality or service (115) of a central office point of delivery (110, 111, 112, 113), or in part on the network node of the telecommunications network (100) or in part on the network node of a broadband access network (120), or in part on the transport functionality or service (115) of the central office point of delivery (110, 111, 112, 113), causes the computer and/or the network node of the telecommunications network (100) and/or the network node of the broadband access network (120) and/or the transport functionality or service (115) of the central office point of delivery (110, 111, 112, 113) to perform a method according one of claims 1 to 7.

## Patentansprüche

1. Verfahren zum Betreiben eines Breitbandzugangsnetzes (120) eines Telekommunikationsnetzes (100), umfassend mehrere Vermittlungsstellen-Übergabepunkte (110, 111, 112, 113),
wobei jeder der mehreren Vermittlungsstellen-Übergabepunkte (110, 111, 112, 113) eine Transportfunktionalität oder einen Transportdienst (115) umfasst und eine Zugangsfunktionalität aufweist oder mit einer solchen verbunden ist, die mittels mehrerer Zugangsknoten realisiert wird, die physische Teilnehmerleitungen abschließen, die Endbenutzer des Telekommunikationsnetzes (100) bedienen,
wobei, in Bezug auf einen spezifischen Vermittlungsstellen-Übergabepunkt (110), die jeweilige Transportfunktionalität oder der jeweilige Transportdienst (115) als ein Eintrittsrouter und/oder ein Austrittsrouter zu einer Wide Area Network-Domäne (101) dient, wobei die Wide Area Network-Domäne (101) eine Multiprotocol Label Switching (MPLS)-Domäne (101) ist oder einer solchen entspricht, wobei die Wide Area Network-Domäne (101) markierte Datenpakete (201) in einer verbindungsorientierten Weise handhabt und/oder transportiert, wobei die markierten Datenpakete (201) MPLS-etikettierte Datenpakete (201) sind oder solchen entsprechen,
**dadurch gekennzeichnet, dass** die Transportfunktionalität oder der Transportdienst (115) einem Switching-Fabric (115) mit einer Leaf-/Spine-Architektur entspricht oder ein solches Switching-Fabric umfasst, wobei das Switching-Fabric (115) mindestens einen Spine-Netzknoten (171, 172) umfasst, wobei der mindestens eine Spine-Netzknoten (171, 172) Teil der Wide Area Network-Domäne (101) ist und als kennungsbasierter Vermittlungsrouter innerhalb der Wide Area Network-Domäne (101) dient, und wobei, um das Breitbandzugangsnetz (120) zum Bereitstellen der mit den mehreren Vermittlungsstellen-Übergabepunkten (110, 111, 112, 113) verknüpften Zugangsfunktionalität zu betreiben, der mindestens eine Spine-Netzknoten (171, 172) des spezifischen Vermittlungsstellen-Übergabepunktes (110), zusätzlich zum Dienen als Eintrittsrouter und/oder als Austrittsrouter, als Etiketten-Vermittlungsrouter dient, der eine kennungsbasierte Vermittlungsrouterfunktionalität der, oder in Richtung der, Wide Area Network-Domäne (101) bereitstellt, dergestalt, dass:
- in einem ersten Schritt, der spezifische Vermittlungsstellen-Übergabepunkt (110) markierte Datenpakete (201) von einem ersten Vermittlungsstellen-Übergabepunkt (111) empfängt, und
- in einem zweiten Schritt, die markierten Datenpakete (201) an einen zweiten Vermittlungsstellen-Übergabepunkt (112) sendet.

2. Verfahren nach Anspruch 1, wobei entsprechende Spine-Netzknoten des ersten und des zweiten Vermittlungsstellen-Übergabepunktes (111, 112) gleichermaßen als kennungsbasierter Vermittlungsrouter innerhalb der Wide-Area-Network-Domäne (101) dienen.

3. Verfahren nach einem der vorangehenden Ansprüche, wobei der mindestens eine Spine-Netzknoten (171, 172) zusätzlich Teil einer weiteren Multiprotocol Label Switching (MPLS)-Domäne (102) von oder unter Komponenten des spezifischen Vermittlungsstellen-Übergabepunktes (110) ist,
wobei der mindestens eine Spine-Netzknoten (171, 172) als kennungsbasierter Vermittlungsrouter innerhalb der weiteren Multiprotocol Label Switching (MPLS)-Domäne (102) dient.

4. Verfahren nach einem der vorangehenden Ansprüche, wobei das Switching-Fabric (115) des spezifischen Vermittlungsstellen-Übergabepunktes (110), neben dem mindestens einen Spine-Netzknoten (171, 172), mehrere Leaf-Netzknoten (161, 162) umfasst, wobei die Leaf-Netzknoten (161, 162) insbesondere eine Randfunktionalität oder einen Randdienst (160) bereitstellen und/oder wobei die Zugangsknoten der Zugangsfunktionalität insbesondere jeweils mit mindestens zwei Leaf-Netzknoten der mehreren Leaf-Netzknoten (161, 162) verbunden sind.

5. Verfahren nach einem der vorangehenden Ansprüche, wobei die entsprechende Transportfunktionalität oder der entsprechende Transportdienst (115) jedes der mehreren Vermittlungsstellen-Übergabepunkte (110, 111, 112, 113) Teil der Wide Area Network-Domäne (101) ist, wobei insbesondere eine gewisse Anzahl von Vermittlungsstellen-Übergabepunkten (110, 111, 112, 113) so verbunden werden, dass sie vermascht sind und insbesondere 3×3- oder 4×4-Maschen von Vermittlungsstellen-Übergabepunkten (110, 111, 112, 113) bilden.

6. Verfahren nach einem der vorangehenden Ansprüche, wobei mittels der entsprechenden Transportfunktionalität oder des entsprechenden Transportdienstes (115) jedes der mehreren Vermittlungsstellen-Übergabepunkte (110, 111, 112, 113) die Vermittlungsstellen-Übergabepunkte (110, 111, 112, 113) nicht nur ein Aggregations- und Diensterzeugungspunkt sind, sondern auch als ein Verkehrsweiterleiter dienen.

7. Verfahren nach einem der vorangehenden Ansprüche, wobei das Telekommunikationsnetz (100) und/oder das Breitbandzugangsnetz (120) zusätzlich einen oder mehrere kennungsbasierte Backbone-Vermittlungsrouter (210) umfassen, wobei die kennungsbasierten Backbone-Vermittlungsrouter (210) Teil der Wide-Area-Network-Domäne (101) sind, wobei mindestens einer der kennungsbasierten Backbone-Vermittlungsrouter (210) zusätzlich mindestens ein Inhaltsbereitstellungsnetz (220) und/oder mindestens ein lokales Datenzentrum (230) umfasst oder damit verbunden ist, wobei das mindestens eine Inhaltsbereitstellungsnetz (220) insbesondere das Caching von Internet-Verkehr ausführt und/oder wobei das mindestens eine lokale Datenzentrum (230) das Speichern von Daten ausführt, insbesondere von sensiblen Daten (202), die nicht an das Internet (240) gesendet werden dürfen.

8. Breitbandzugangsnetz (120) oder Telekommunikationsnetz (100) zum Betreiben, umfassend mehrere Vermittlungsstellen-Übergabepunkte (110, 111, 112, 113),
wobei jeder der mehreren Vermittlungsstellen-Übergabepunkte (110, 111, 112, 113) eine Transportfunktionalität oder einen Transportdienst (115) umfasst und eine Zugangsfunktionalität aufweist oder mit einer solchen verbunden ist, die mittels mehrerer Zugangsknoten realisiert wird, die physische Teilnehmerleitungen abschließen, die Endbenutzer des Telekommunikationsnetzes (100) bedienen,
wobei, in Bezug auf einen spezifischen Vermittlungsstellen-Übergabepunkt (110), die jeweilige Transportfunktionalität oder der jeweilige Transportdienst (115) als ein Eintrittsrouter und/oder ein Austrittsrouter zu einer Wide Area Network-Domäne (101) dient, wobei die Wide Area Network-Domäne (101) eine Multiprotocol Label Switching (MPLS)-Domäne (101) ist oder einer solchen entspricht, wobei die Wide Area Network-Domäne (101) markierte Datenpakete (201) in einer verbindungsorientierten Weise handhabt und/oder transportiert, wobei die markierten Datenpakete (201) MPLS-etikettierte Datenpakete (201) sind oder solchen entsprechen,
**dadurch gekennzeichnet, dass** die Transportfunktionalität oder der Transportdienst (115) einem Switching-Fabric (115) mit einer Leaf-/Spine-Architektur entspricht oder ein solches Switching-Fabric umfasst, wobei das Switching-Fabric (115) mindestens einen Spine-Netzknoten (171, 172) umfasst, wobei der mindestens eine Spine-Netzknoten (171, 172) Teil der Wide Area Network-Domäne (101) ist und dafür eingerichtet ist, als kennungsbasierter Vermittlungsrouter innerhalb der Wide Area Network-Domäne (101) zu dienen, und wobei, um das Breitbandzugangsnetz (120) und/oder das Telekommunikationsnetz (100) zum Bereitstellen der mit den mehreren Vermittlungsstellen-Übergabepunkten (110, 111, 112, 113) verknüpften Zugangsfunktionalität zu betreiben, der mindestens eine Spine-Netzknoten (171, 172) des spezifischen Vermittlungsstellen-Übergabepunktes (110) so eingerichtet ist, dass er, zusätzlich zum Dienen als Eintrittsrouter und/oder als Austrittsrouter, als ein Etiketten-Vermittlungsrouter dient, der eine kennungsbasierte Vermittlungsrouterfunktionalität der, oder in Richtung der, Wide-Area-Network-Domäne (101) bereitstellt, indem er markierte Datenpakete (201) von einem ersten Vermittlungsstellen-Übergabepunkt (111) empfängt und die markierten Datenpakete (201) zu einem zweiten Vermittlungsstellen-Übergabepunkt (112) sendet.

9. Vermittlungsstellen-Übergabepunkt (110) zum Betreiben eines Breitbandzugangsnetzes (120) eines Telekommunikationsnetzes (100), umfassend mehrere Vermittlungsstellen-Übergabepunkte (110, 111, 112, 113),
wobei der Vermittlungsstellen-Übergabepunkt (110) eine Transportfunktionalität oder einen Transportdienst (115) umfasst und eine Zugangsfunktionalität aufweist oder mit einer solchen verbunden ist, die mittels mehrerer Zugangsknoten realisiert wird, die physische Teilnehmerleitungen abschließen, die Endbenutzer des Telekommunikationsnetzes (100) bedienen,
wobei die Transportfunktionalität oder der Transportdienst (115) als ein Eintrittsrouter und/oder ein Austrittsrouter zu einer Wide Area Network-Domäne (101) dient, wobei die Wide Area Network-Domäne (101) eine Multiprotocol Label Switching (MPLS)-Domäne (101) ist oder einer solchen entspricht,
wobei die Wide Area Network-Domäne (101) markierte Datenpakete (201) in einer verbindungsorientierten Weise handhabt und/oder transportiert, wobei die markierten Datenpakete (201) MPLS-etikettierte Datenpakete (201) sind oder solchen entsprechen,
**dadurch gekennzeichnet, dass** die Transportfunktionalität oder der Transportdienst (115) einem Switching-Fabric (115) mit einer Leaf-/Spine-Architektur entspricht oder ein solches Switching-Fabric umfasst, wobei das Switching-Fabric (115) mindestens einen Spine-Netzknoten (171, 172) umfasst, wobei der mindestens eine Spine-Netzknoten (171, 172) Teil der Wide Area Network-Domäne (101) ist und dafür eingerichtet ist, als kennungsbasierter Vermittlungsrouter innerhalb der Wide Area Network-Domäne (101) zu dienen, und wobei, zum Bereitstellen der mit dem Vermittlungsstellen-Übergabepunkt (110) verknüpften Zugangsfunktionalität, der mindestens eine Spine-Netzknoten (171, 172) des Vermittlungsstellen-Übergabepunktes (110) so eingerichtet ist, dass er, zusätzlich zum Dienen als Eintrittsrouter und/oder als Austrittsrouter, als Etiketten-Vermittlungsrouter dient, der eine kennungsbasierte Vermittlungsrouterfunktionalität der, oder in Richtung der, Wide-Area-Network-Domäne (101) bereitstellt, indem er markierte Datenpakete (201) von einem ersten Vermittlungsstellen-Übergabepunkt (111) der mehreren Vermittlungsstellen-Übergabepunkte (110, 111, 112, 113) empfängt und die markierten Datenpakete (201) zu einem zweiten Vermittlungsstellen-Übergabepunkt (112) der mehreren Vermittlungsstellen-Übergabepunkte (110, 111, 112, 113) sendet.

10. Programm, umfassend einen computerlesbaren Programmcode, der, wenn er auf einem Computer und/oder in einem Netzknoten eines Telekommunikationsnetzes (100) oder in einem Netzknoten eines Breitbandzugangsnetzes (120) und/oder in einer Transportfunktionalität oder einem Transportdienst (115) eines Vermittlungsstellen-Übergabepunktes (110, 111, 112, 113) oder teilweise in dem Netzknoten des Telekommunikationsnetzes (100) oder teilweise in dem Netzknoten eines Breitbandzugangsnetzes (120) oder teilweise in der Transportfunktionalität oder dem Transportdienst (115) des Vermittlungsstellen-Übergabepunktes (110, 111, 112, 113) ausgeführt wird, den Computer und/oder den Netzknoten des Telekommunikationsnetzes (100) und/oder den Netzknoten des Breitbandzugangsnetzes (120) und/oder die Transportfunktionalität oder den Transportdienst (115) des Vermittlungsstellen-Übergabepunktes (110, 111, 112, 113) veranlasst, ein Verfahren nach einem der Ansprüche 1 bis 7 durchzuführen.

11. Computerlesbares Medium, umfassend Instruktionen, die, wenn sie auf einem Computer und/oder in einem Netzknoten eines Telekommunikationsnetzes (100) oder in einem Netzknoten eines Breitbandzugangsnetzes (120) und/oder in einer Transportfunktionalität oder einem Transportdienst (115) eines Vermittlungsstellen-Übergabepunktes (110, 111, 112, 113) oder teilweise in dem Netzknoten des Telekommunikationsnetzes (100) oder teilweise in dem Netzknoten eines Breitbandzugangsnetzes (120) oder teilweise in der Transportfunktionalität oder dem Transportdienst (115) des Vermittlungsstellen-Übergabepunktes (110, 111, 112, 113) ausgeführt werden, den Computer und/oder den Netzknoten des Telekommunikationsnetzes (100) und/oder den Netzknoten des Breitbandzugangsnetzes (120) und/oder die Transportfunktionalität oder den Transportdienst (115) des Vermittlungsstellen-Übergabepunktes (110, 111, 112, 113) veranlassen, ein Verfahren nach einem der Ansprüche 1 bis 7 durchzuführen.

## Revendications

1. Procédé d'exploitation d'un réseau d'accès à large bande (120) d'un réseau de télécommunication (100) comprenant une pluralité de points de livraison de central téléphonique (110, 111, 112, 113),
dans lequel chacun des points de livraison de central téléphonique (110, 111, 112, 113) comprend une fonctionnalité ou un service de transport (115) et possède ou est connecté à une fonctionnalité d'accès réalisée au moyen d'une pluralité de noeuds d'accès qui terminent des lignes d'abonnés physiques desservant des utilisateurs finaux du réseau de télécommunication (100),
dans lequel, en ce qui concerne un point de livraison de central téléphonique spécifique (110), la fonctionnalité ou le service de transport respectif (115) agit comme routeur d'entrée et/ou routeur de sortie vers un domaine de réseau étendu (101), dans lequel le domaine de réseau étendu (101) est ou correspond à un domaine de commutation multiprotocole par étiquette, MPLS, (101),
dans lequel le domaine de réseau étendu (101) traite et/ou transporte des paquets de données marqués (201) d'une manière orientée connexion, dans lequel les paquets de données marqués (201) sont ou correspondent à des paquets de données étiquetés MPLS (201),
**caractérisé en ce que** la fonctionnalité ou le service de transport (115) correspond à ou comprend un tissu de commutation (115) avec une architecture feuilles/tronc, dans lequel le tissu de commutation (115) comprend au moins un noeud de réseau tronc (171, 172), dans lequel ledit au moins un noeud de réseau tronc (171, 172) fait partie du domaine de réseau étendu (101) et agit comme routeur de commutation basé sur identifiants dans le domaine de réseau étendu (101), et dans lequel, afin d'exploiter le réseau d'accès à large bande (120) pour fournir la fonctionnalité d'accès associée à la pluralité de points de livraison de central téléphonique (110, 111, 112, 113), ledit au moins un noeud de réseau tronc (171, 172) du point de livraison de central téléphonique spécifique (110), en plus d'agir comme routeur d'entrée et/ou comme routeur de sortie, agit comme routeur de commutation d'étiquettes fournissant une fonctionnalité de routeur de commutation basé sur identifiants du ou vers le domaine de réseau étendu (101) de telle que :
- dans une première étape, le point de livraison de central téléphonique spécifique (110) reçoit des paquets de données marqués (201) d'un premier point de livraison de central téléphonique (111), et
- dans une deuxième étape, il transmet les paquets de données marqués (201) à un deuxième point de livraison de central téléphonique (112).

2. Procédé selon la revendication 1, dans lequel les noeuds de réseau tronc correspondants des premier et deuxième points de livraison de central téléphonique (111, 112) agissent de même comme routeur de commutation basé sur identifiants dans le domaine de réseau étendu (101).

3. Procédé selon l'une des revendications précédentes, dans lequel ledit au moins un noeud de réseau tronc (171, 172) fait en outre partie d'un autre domaine de commutation multiprotocole par étiquette, MPLS, (102) de ou parmi les composants du point de livraison de central téléphonique spécifique (110), dans lequel ledit au moins un noeud de réseau tronc (171, 172) agit comme routeur de commutation basé sur identifiants dans le domaine de commutation multiprotocole par étiquette, MPLS, (102).

4. Procédé selon l'une des revendications précédentes, dans lequel le tissu de commutation (115) du point de livraison de central téléphonique spécifique (110) comprend, outre ledit au moins un noeud de réseau tronc (171, 172), une pluralité de noeuds de réseau feuille (161, 162), dans lequel les noeuds de réseau feuille (161, 162) fournissent en particulier une fonctionnalité ou un service de bordure (160) et/ou dans lequel les noeuds d'accès de la fonctionnalité d'accès sont en particulier connectés, respectivement, à au moins deux noeuds de réseau feuille de la pluralité de noeuds de réseau feuille (161, 162).

5. Procédé selon l'une des revendications précédentes, dans lequel la fonctionnalité ou le service de transport correspondant (115) de chacun de la pluralité de points de livraison de central téléphonique (110, 111, 112, 113) font partie du domaine de réseau étendu (101), dans lequel en particulier un certain nombre de points de livraison de central téléphonique (110, 111, 112, 113) sont connectés de manière à être maillés, en particulier en formant des maillages 3X3, ou 4X4 de points de livraison de central téléphonique (110, 111, 112, 113).

6. Procédé selon l'une des revendications précédentes, dans lequel, au moyen de la fonctionnalité ou du service de transport correspondant (115) de chacun de la pluralité de points de livraison de central téléphonique (110, 111, 112, 113), les points de livraison de central téléphonique (110, 111, 112, 113) agissent comme point de transfert de trafic, en plus d'être un point d'agrégation et de création de services.

7. Procédé selon l'une des revendications précédentes, dans lequel le réseau de télécommunication (100) et/ou le réseau d'accès à large bande (120) comprennent en outre un ou plusieurs routeurs de commutation basés sur identifiants de réseau dorsal (210), dans lequel les routeurs de commutation basés sur identifiants de réseau dorsal (210) font partie du domaine de réseau étendu (101), dans lequel au moins un des routeurs de commutation basés sur identifiants de réseau dorsal (210) comprend en outre ou est connecté à au moins un réseau de livraison de contenu (220) et/ou au moins un centre de données local (230), dans lequel ledit au moins un réseau de livraison de contenu (220) permet en particulier de mettre en cache le trafic internet et/ou dans lequel ledit au moins un centre de données local (230) permet de stocker des données, en particulier des données sensibles (202) qui ne doivent pas être envoyées sur internet (240).

8. Réseau d'accès à large bande (120) ou réseau de télécommunication (100) destiné à être exploité et comprenant une pluralité de points de livraison de central téléphonique (110, 111, 112, 113),
dans lequel chacun des points de livraison de central téléphonique (110, 111, 112, 113) comprend une fonctionnalité ou un service de transport (115) et possède ou est connecté à une fonctionnalité d'accès réalisée au moyen d'une pluralité de noeuds d'accès qui terminent des lignes d'abonnés physiques desservant des utilisateurs finaux du réseau de télécommunication (100),
dans lequel, en ce qui concerne un point de livraison central spécifique (110), la fonctionnalité ou le service de transport respectif (115) agit comme routeur d'entrée et/ou routeur de sortie vers un domaine de réseau étendu (101), dans lequel le domaine de réseau étendu (101) est ou correspond à un domaine de commutation multiprotocole par étiquette, MPLS, (101),
dans lequel le domaine de réseau étendu (101) traite et/ou transporte des paquets de données marqués (201) d'une manière orientée connexion, dans lequel les paquets de données marqués (201) sont ou correspondent à des paquets de données étiquetés MPLS (201),
**caractérisé en ce que** la fonctionnalité ou le service de transport (115) correspond à ou comprend un tissu de commutation (115) avec une architecture feuilles/tronc, dans lequel le tissu de commutation (115) comprend au moins un noeud de réseau tronc (171, 172), dans lequel ledit au moins un noeud de réseau tronc (171, 172) fait partie du domaine de réseau étendu (101) et est configuré pour agir comme routeur de commutation basé sur identifiants dans le domaine de réseau étendu (101), et dans lequel, afin que le réseau d'accès à large bande (120) et/ou le réseau de télécommunication (100) soit exploité pour fournir la fonctionnalité d'accès associée à la pluralité de points de livraison de central téléphonique (110, 111, 112, 113), ledit au moins un noeud de réseau tronc (171, 172) du point de livraison de central téléphonique spécifique (110) est configuré de telle sorte que, en plus d'agir comme routeur d'entrée et/ou comme routeur de sortie, il agit comme routeur de commutation d'étiquettes fournissant une fonctionnalité de routeur de commutation basé sur identifiants du ou vers le domaine de réseau étendu (101) en recevant des paquets de données marqués (201) d'un premier point de livraison de central téléphonique (111) et en transmettant les paquets de données marqués (201) à un deuxième point de livraison de central téléphonique (112) .

9. Point de livraison de central téléphonique (110) pour exploiter un réseau d'accès à large bande (120) d'un réseau de télécommunication (100) qui comprend une pluralité de points de livraison de central téléphonique (110, 111, 112, 113), dans lequel le point de livraison de central téléphonique (110) comprend une fonctionnalité ou un service de transport (115) et possède ou est connecté à une fonctionnalité d'accès réalisée au moyen d'une pluralité de noeuds d'accès qui terminent des lignes d'abonné physiques desservant des utilisateurs finaux du réseau de télécommunication (100),
dans lequel la fonctionnalité ou le service de transport (115) agit comme routeur d'entrée et/ou routeur de sortie vers un domaine de réseau étendu (101), dans lequel le domaine de réseau étendu (101) est ou correspond à un domaine de commutation multiprotocole par étiquette, MPLS, (101),
dans lequel le domaine de réseau étendu (101) traite et/ou transporte des paquets de données marqués (201) d'une manière orientée connexion, dans lequel les paquets de données marqués (201) sont ou correspondent à des paquets de données étiquetés MPLS (201),
**caractérisé en ce que** la fonctionnalité ou le service de transport (115) correspond à ou comprend un tissu de commutation (115) avec une architecture feuilles/tronc, dans lequel le tissu de commutation (115) comprend au moins un noeud de réseau tronc (171, 172), dans lequel ledit au moins un noeud de réseau tronc (171, 172) fait partie du domaine de réseau étendu (101) et est configuré pour agir comme routeur de commutation basé sur identifiants dans le domaine de réseau étendu (101), et dans lequel, afin de fournir la fonctionnalité d'accès associée au point de livraison de central téléphonique (110), ledit au moins un noeud de réseau tronc (171, 172) du point de livraison de central téléphonique (110) est configuré de telle sorte que, en plus d'agir comme routeur d'entrée et/ou comme routeur de sortie, il agit comme routeur de commutation d'étiquettes fournissant une fonctionnalité de routeur de commutation basé sur identifiants du ou vers le domaine de réseau étendu (101) en recevant des paquets de données marqués (201) d'un premier point de livraison de central téléphonique (111) de la pluralité de points de livraison de central téléphonique (110, 111, 112, 113) et en transmettant les paquets de données marqués (201) à un deuxième point de livraison de central téléphonique (112) de la pluralité de points de livraison de central téléphonique (110, 111, 112, 113).

10. Programme comprenant un code de programme lisible par ordinateur qui, lorsqu'il est exécuté sur un ordinateur et/ou sur un noeud de réseau d'un réseau de télécommunication (100) ou sur un noeud de réseau d'un réseau d'accès à large bande (120) et/ou sur une fonctionnalité ou un service de transport (115) d'un point de livraison de central téléphonique (110, 111, 112, 113), ou en partie sur le noeud de réseau du réseau de télécommunication (100) ou en partie sur le noeud de réseau d'un réseau d'accès à large bande (120) ou en partie sur la fonctionnalité ou le service de transport (115) du point de livraison de central téléphonique (110, 111, 112, 113), amène l'ordinateur et/ou le noeud de réseau du réseau de télécommunication (100) et/ou le noeud de réseau du réseau d'accès à large bande (120) et/ou la fonctionnalité ou le service de transport (115) du point de livraison de central téléphonique (110, 111, 112, 113) à mettre en œuvre un procédé selon l'une des revendications 1 à 7.

11. Support lisible par ordinateur comprenant des instructions qui, lorsqu'elles sont exécutées sur un ordinateur et/ou sur un noeud de réseau d'un réseau de télécommunication (100) ou sur un noeud de réseau d'un réseau d'accès à large bande (120) et/ou sur une fonctionnalité ou un service de transport (115) d'un point de livraison de central téléphonique (110, 111, 112, 113), ou en partie sur le noeud de réseau du réseau de télécommunication (100) ou en partie sur le noeud de réseau d'un réseau d'accès à large bande (120) ou en partie sur la fonctionnalité ou le service de transport (115) du point de livraison de central téléphonique (110, 111, 112, 113), amène l'ordinateur et/ou le noeud de réseau du réseau de télécommunication (100) et/ou le noeud de réseau du réseau d'accès à large bande (120) et/ou la fonctionnalité ou le service de transport (115) du point de livraison de central téléphonique (110, 111, 112, 113) à mettre en œuvre un procédé selon l'une des revendications 1 à 7.
